(19) Europäisches Patentamt / European Patent Office / Office européen des brevets

(11) **EP 3 309 210 B1**

(12) **EUROPEAN PATENT SPECIFICATION**

(45) Date of publication and mention
of the grant of the patent:
**08.01.2020 Bulletin 2020/02**

(21) Application number: **16807136.3**

(22) Date of filing: **10.06.2016**

(51) Int Cl.:
*C08L 21/00* (2006.01)        *B60C 1/00* (2006.01)
*C08K 3/22* (2006.01)        *C08K 3/36* (2006.01)
*C08K 9/02* (2006.01)

(86) International application number:
**PCT/JP2016/002809**

(87) International publication number:
**WO 2016/199429 (15.12.2016 Gazette 2016/50)**

(54) **RUBBER COMPOSITION AND TIRE**

KAUTSCHUKZUSAMMENSETZUNG UND REIFEN

COMPOSITION DE CAOUTCHOUC ET PNEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.06.2015 JP 2015119600**

(43) Date of publication of application:
**18.04.2018 Bulletin 2018/16**

(73) Proprietor: **Bridgestone Corporation
Tokyo 104-8340 (JP)**

(72) Inventor: **SAITOU, Kouichi
Tokyo 104-8340 (JP)**

(74) Representative: **Oxley, Robin John George
Marks & Clerk LLP
15 Fetter Lane
London EC4A 1BW (GB)**

(56) References cited:
**FR-A1- 2 818 631        FR-A1- 2 994 961
JP-A- H10 504 012        JP-A- 2000 072 434
JP-A- 2010 514 897**

**Description**

TECHNICAL FIELD

This disclosure relates to rubber compositions and tires.

BACKGROUND

Among other rubber products from rubber compositions, tires are required to have so high performance as to meet multiple performance requirements at the same time. In particular, there is a strong demand for tire members such as treads that can reduce the rolling resistance of the tires and are excellent in wear resistance. There is a tradeoff between these properties, however, which have necessitated years and years of trial and error to date.

Rubber compositions applied to tire treads use hydrous silicate as a reinforcing filler (see, for example, JPH6248116A (PTL 1)). In general, as the content of silica increases, the wear resistance of the tire improves to some extent, yet the rolling resistance may deteriorate. In some cases, the viscosity of unvulcanized rubber increases more than is required, which may result in reduced workability.

Under these circumstances, to solve the above issues, techniques pertaining to improvement of wear resistance, low-loss property, and workability by adding aluminum in production of silica have been developed (see, for example, JP2001294711A (PTL 2)).

FR 2 994 961 A1 discloses precipitated silica with specific properties. These are used as filler in rubber compositions.

CITATION LIST

Patent Literature

PTL 1: JPH6248116A
PTL 2: JP2001294711A

SUMMARY

(Technical Problem)

However, although a certain improvement effect can be obtained with respect to wear resistance in PTL 1 and low-loss property in PTL 2, none of the conventional techniques could improve unvulcanized viscosity, wear resistance, and low-loss property at the same time, and thus further improvement is desired.

It would thus be helpful to provide a rubber composition and a tire that can reduce unvulcanized viscosity and have excellent wear resistance and low-loss property.

(Solution to Problem)

We conducted intensive studies on rubber compositions containing silica to solve the above issues and, as a result, found that a favorable silica surface state for dispersion during kneading can be obtained by adjusting the pH of silica before and after washing to a specific range and by causing silica to contain $Al_2O_3$ in a specific amount, resulting in reduced unvulcanized viscosity as well as excellent wear resistance and low-loss property. In this way, we completed the present disclosure.

The present disclosure is based on these discoveries and primary features thereof are as follows:
A rubber composition according to the disclosure comprises silica and carbon black by 80 parts or less per 100 parts by mass of a rubber component, wherein the silica has a pH of 10.0 or less before washing and a pH of 4.0 or more after washing, and contains $Al_2O_3$, and the content in mass% of $Al_2O_3$, a BET specific surface area in $m^2/g$ of the silica and a CTAB specific surface area in $m^2/g$ of the silica satisfy:

$$Al_2O_3 - 10.9 \times (\text{BET specific surface area/CTAB specific surface area}) > -9.5,$$

wherein the content of $Al_2O_3$ in the silica is 0.2 mass% to 5 mass%, and wherein the CTAB specific surface area of the silica is 175 m$^2$/g or more, and the BET specific surface area of the silica is 200 m$^2$/g or more.

With this configuration, it is possible to reduce unvulcanized viscosity and provide excellent wear resistance and low-loss property.

In the rubber composition disclosed herein, the CTAB specific surface area of the silica is 175 m$^2$/g or more. With this configuration, it is possible to increase the dispersibility improving effect, further reduce unvulcanized viscosity, and provide even better wear resistance and low-loss property.

In the rubber composition disclosed herein, the BET specific surface area of the silica is 200 m$^2$/g or more. With this configuration, it is possible to increase the dispersibility improving effect, further reduce unvulcanized viscosity, and provide even better wear resistance and low-loss property.

In the rubber composition disclosed herein, a BET specific surface area in m$^2$/g and a CTAB specific surface area in m$^2$/g of the silica satisfy:

$$Al_2O_3 - 10.9 \times (\text{BET specific surface area/CTAB specific surface area}) > -9.5.$$

This configuration provides a silica surface state that is favorable for dispersion during kneading, making it possible to further reduce unvulcanized viscosity and provide even better wear resistance and low-loss property.

Furthermore, in the rubber composition disclosed herein, the content of $Al_2O_3$ in the silica is 0.2 to 5 mass%. With this configuration, it is possible to further reduce unvulcanized viscosity and provide even better wear resistance and low-loss property.

In addition, in the rubber composition disclosed herein, the content of silica is preferably 5 to 200 parts by mass, more preferably 15 to 150 parts by mass, and particularly preferably 25 to 120 parts by mass, per 100 parts by mass of the rubber component.

With this configuration, the content of silica is appropriate, making it possible to further reduce unvulcanized viscosity and provide even better wear resistance and low-loss property.

Further, it is preferable that the silica is produced by a wet process in which pH is adjusted without using a basic agent, while using an alkali metal silicate and an acidic agent.

It is also preferable that the silica is obtainable by addition of aluminate (i) after completion of a formation reaction of silica particles and (ii) after emulsification of a silica cake resulting from washing with water.

With this constitution, it is possible to further reduce unvulcanized viscosity and provide even better wear resistance and low-loss property.

A tire according to the disclosure comprises the rubber composition disclosed herein.

With the above-described configuration, it is possible to reduce unvulcanized viscosity and provide excellent wear resistance and low-loss property.

(Advantageous Effect)

With the rubber composition disclosed herein, it is possible to provide a rubber composition and a tire that can reduce unvulcanized viscosity and have excellent wear resistance and low-loss property.

DETAILED DESCRIPTION

The present disclosure will be described in detail below.

(Rubber Composition)

The rubber composition disclosed herein is a rubber composition that contains silica.

• Rubber Component

No particular limitation is placed on the rubber component contained in the rubber composition. Preferably, from the viewpoint of providing excellent wear resistance, natural rubber and diene-based synthetic rubber may be used alone or in combination.

Examples of such diene-based synthetic rubber include polyisoprene rubber (IR), styrene butadiene copolymer rubber (SBR), and polybutadiene rubber (BR). Among these, preferred is styrene butadiene copolymer rubber (SBR). These diene-based synthetic rubbers may be used alone or as a blend of two or more.

• Silica

Silica is compounded in the rubber composition. In this disclosure, the pH of the silica is adjusted such that it is 10.0 or less before washing and 4.0 or more after washing.

By adjusting the pH of the silica before and after washing within this range, it is possible to form a silica surface state that is favorable for dispersion during kneading, and the dispersibility of silica is markedly improved, which makes it possible to reduce the unvulcanized viscosity of the silica composition and provide excellent wear resistance and low-loss property. The pH before washing is set to 10.0 or less because when the pH exceeds 10.0, the wear resistance of the rubber deteriorates due to the resulting change in the crosslinking form, while the pH after washing is set to 4.0 or more because a sufficient dispersion improving effect cannot be obtained when the pH is below 4.0. Outside the aforementioned range, a silica surface state favorable for the rubber composition cannot be formed.

No particular limitation is placed on the type of silica. Examples thereof include wet silica, colloidal silica, calcium silicate, and aluminum silicate.

Among these, the silica is preferably wet silica, and more preferably precipitated silica. These silicas have high dispersibility and can improve the reinforcing property of the rubber composition. As used herein, the term "precipitated silica" refers to silica that is obtained by, during the early part of the production process, allowing a reaction solution to react in a relatively high temperature and in a neutral to alkaline pH range to grow silica primary particles, and then controlling the solution to an acidic side so as to cause agglomeration of the primary particles.

Further, as described above, by controlling the pH of the silica before and after washing to a certain range, it is possible to form a silica surface state that is favorable for dispersion in rubber. The pH of the silica before washing is preferably 9.0 or less, and more preferably 8.0 or less. Further, the pH of the silica after washing is preferably 4.3 or more, and more preferably 4.6 or more. Setting the pH of the silica within these ranges makes it possible to obtain an even greater effect in reducing unvulcanized viscosity, as well as even better wear resistance and low-loss property.

The pH of the silica before washing can be measured in accordance with, for example, ISO 787-9. Specifically, pH measurement can be carried out as follows: a graduated pH meter (reading accuracy up to 1/100), a composite glass electrode, a 200 mL beaker, a cylinder for 100 mL measurement, and a balance with an accuracy up to 0.01 g are prepared, and then 5 g of silica is weighed at an accuracy of 0.01 g in the 200 mL beaker, 95 mL of distilled water weighed from the graduated measuring cylinder is added to the silica powder, and the resulting suspension is stirred vigorously for 10 minutes (electromagnetic stirring) for pH measurement.

The pH of the silica after washing can be measured by the following method. Specifically, 2 g of silica is weighed at an accuracy of 0.01 g in the 200 mL beaker, 30 mL of distilled water measured from the graduated measuring cylinder is added to the silica powder, then pH measurement is started while stirring the resulting suspension at room temperature, and hydrochloric acid adjusted to 0.05 mol/L and distilled water are added to prepare 100 mL of a suspension having a pH of 2.3 to 2.7. Stirring of the suspension is stopped and the mixture is allowed to stand for 30 minutes, then the supernatant liquid is discarded by decantation to leave a precipitate. Then the following operation (A) is repeated.

--Operation (A): In this operation, 100 mL of distilled water weighed from the graduated measuring cylinder is added to the precipitate obtained by the immediately preceding operation, the resulting suspension is stirred for 10 minutes and allowed to stand for 30 minutes, at least 90 mL of the supernatant is discarded by decantation to leave a precipitate, and the composite glass electrode is inserted into the resulting precipitate to measure the pH of the precipitate.

This Operation (A) is repeated, and at each iteration the pH of the resulting precipitate is recorded at an accuracy of 0.1, and if it gives the same pH three times consecutively, the precipitate is dried at 150 °C for 2 hours and, after ascertaining that the silica is 1.6 g or more, the pH is defined as the pH after washing.

Here, the CTAB specific surface area (specific surface area by cetyltrimethylammonium bromide adsorption) of the silica is 175 $m^2$/g or more. The reason is that since a surface condition favorable for dispersion is formed by adjusting the pH of the silica surface, a higher surface area is preferable, and by setting the CTAB specific surface area to 175 $m^2$/g or more, even better low wear resistance and low-loss property can be obtained and unvulcanized viscosity can be further reduced. On the other hand, when the CTAB specific surface area is less than 175 $m^2$/g, sufficient unvulcanized viscosity reduction, wear resistance, and low-loss property may not be obtained.

The CTAB specific surface area refers to a value measured in accordance with ASTM D3765-92. However, assuming that the adsorption cross-sectional area per molecule of cetyltrimethylammonium bromide (hereinafter abbreviated as CTAB) with respect to the silica surface is 0.35 $nm^2$, the specific surface area in $m^2$/g calculated from the CTAB adsorption amount is defined as the CTAB specific surface area.

Here, the BET specific surface area of the silica is 200 $m^2$/g or more. Since a surface condition favorable for dispersion is formed by adjusting the pH of the silica surface, a higher surface area is preferable, and by setting the BET specific surface area to 200 $m^2$/g or more, unvulcanized viscosity can be further reduced and even better low wear resistance and low-loss property can be obtained. On the other hand, when the BET specific surface area is less than 200 $m^2$/g, sufficient unvulcanized viscosity reduction, wear resistance, and low-loss property may not be obtained.

The BET specific surface area refers to the specific surface area determined by the BET method, and in this disclosure, it can be measured in accordance with ASTM D4820-93.

The silica contains Al$_2$O$_3$ as an Al component, and the content (mass%) of Al$_2$O$_3$ of the silica and the BET specific surface area in m$^2$/g and CTAB specific surface area in m$^2$/g of the silica needs to satisfy:

$$\text{Al}_2\text{O}_3 - 10.9 \times (\text{BET specific surface area/CTAB specific surface area}) > -9.5.$$

A larger value of BET specific surface area/CTAB specific surface area indicates that the silica contain more pores. Such pores tend to increase with increasing content of Al$_2$O$_3$ in the silica. By increasing the content of Al$_2$O$_3$ relative to the pores in the silica, more heterogeneous structures are formed on the silica surface and interaction with rubber molecules more easily occur, making it possible to further reduce unvulcanized viscosity and provide even better wear resistance and low-loss property.

The content of Al$_2$O$_3$ in the silica is 0.2 to 5 mass%, and more preferably 1 to 3 mass%. By increasing the content of Al$_2$O$_3$, more heterogeneous structures are formed on the silica surface and interaction with rubber molecules more easily occur, making it possible to further reduce unvulcanized viscosity and provide even better wear resistance and low-loss property. When the content of Al$_2$O$_3$ in the silica is less than 0.2 mass%, the content of Al$_2$O$_3$ is too low to form sufficient heterogeneous structures on the silica surface. On the other hand, when the content of Al$_2$O$_3$ in the silica exceeds 5 mass%, the content of Al$_2$O$_3$ is excessively high, and the wear resistance of the rubber deteriorates due to the resulting change in the crosslinking form. Outside the aforementioned range, it is impossible to form a silica surface state favorable for the rubber composition.

The content of the silica is preferably 5 to 200 parts by mass, more preferably 15 to 150 parts by mass, and particularly preferably 25 to 120 parts by mass, per 100 parts by mass of the rubber component. When the content of the silica is less than 5 parts by mass, the silica content is too low, and sufficient unvulcanized viscosity reducing effect, wear resistance, and low-loss property may not be obtained. On the other hand, when the content of the silica exceeds 200 parts by mass, the amount of silica is too large, and the processability and rolling resistance of the rubber composition may decrease.

No particular limitation is placed on the method of kneading the rubber component with the silica. For example, the rubber component may be kneaded with the silica using an open type kneader such as a roll, an internal mixer such as a Banbury mixer, or the like.

No particular limitation is placed on the method of producing the silica, and any known production method may be used as long as it is capable of providing silica satisfying the above-mentioned conditions.
However, in order to easily control the pH before washing and the pH after washing, it is preferable to produce the silica by a wet process in which pH is adjusted without using a basic agent, while using an alkali metal silicate and an acidic agent.

Preferably, the method of producing the silica comprises adding aluminate. Preferred points in time for adding the aluminate are: (i) after completion of a formation reaction of silica particles in the reaction vessel, and (ii) after emulsification of a silica cake resulting from washing with water in the subsequent step. When the aluminate is added during, rather than after, the formation of silica particles, the aluminate is incorporated into the silica particles, and sufficient heterogeneous structures may not be formed on the silica surface.

• Silane Coupling Agent

Preferably, the rubber composition disclosed herein further contains a silane coupling agent in addition to the silica. The reason is that this setup may achieve further improvement in the effect of containing the silica and in the physical properties of the rubber composition, such as low heat generating property and wear resistance.

The silane coupling agent is preferably contained in an amount of 1 to 20 parts by mass, more preferably 3 to 16 parts by mass, and particularly preferably 5 to 12 parts by mass, per 100 parts by mass of the silica. The reason is that compounding the silane coupling agent in an amount of 1 part by mass or more per 100 parts by mass of the silica may achieve further improvement in the effect of containing hydrous silicate and in the physical properties of the rubber composition, such as low heat generating property and wear resistance, whereas compounding the silane coupling agent beyond 20 parts by mass does not contribute to improving the physical properties and may end up causing an increase in costs.

Preferred as the silane coupling agent is at least one compound selected from the group consisting of:

a compound represented by:

$$\text{A}_m\text{B}_{3-m}\text{Si-(CH}_2)_a\text{-S}_b\text{-(CH}_2)_a\text{-SiA}_m\text{B}_{3-m} \qquad \text{(IV)},$$

where A is $C_nH_{2n+1}O$ (n is an integer of 1 to 3) or a chlorine atom; B is an alkyl group having 1 to 3 carbon atoms; m is an integer of 1 to 3; a is an integer of 1 to 9; and b is an integer of 1 or more, provided that when m is 1, B may be the same as or different from each other, and when m is 2 or 3, A may be the same as or different from each other;

a compound represented by:

$$A_mB_{3-m}Si\text{-}(CH_2)_c\text{-}Y \qquad (V),$$

where A, B, Y, m, and c are as defined above,

a compound represented by:

$$A_mB_{3-m}Si\text{-}(CH_2)_a\text{-}S_b\text{-}Z \qquad (VI),$$

where A, B, Z, m, a, and b are as defined above, and

a compound represented by:

$$R^1_xR^2_yR^3_zSi\text{-}R^4\text{-}S\text{-}CO\text{-}R^5 \qquad (VII),$$

where $R^1$ is selected from $R^6O\text{-}$, $R^6C(=O)O\text{-}$, $R^6R^7C=NO\text{-}$, $R^6R^7NO\text{-}$, $R^6R^7N\text{-}$, or $\text{-}(OSiR^6R^7)_n(OSiR^5R^6R^7)$, and has 1 to 18 carbon atoms, provided that $R^6$ and $R^7$ are each independently selected from an alkyl group, a cycloalkyl group, an alkenyl group, a cycloalkenyl group, or an aryl group, and have 1 to 18 carbon atoms, and n is from 0 to 10;

$R^2$ is selected from hydrogen, an alkyl group having 1 to 18 carbon atoms, a cycloalkyl group, an alkenyl group, a cycloalkenyl group, or an aryl group;

$R^3$ is $\text{-}[O(R^8O)_m]_{0.5}\text{-}$, provided that $R^8$ is selected from an alkylene group or a cycloalkylene group, and has 1 to 18 carbon atoms, and m is 1 to 4;

x, y, and z satisfy the relations of x+y+2z=3, 0≤x≤3, 0≤y≤2, and 0≤z≤1;

$R^4$ is selected from an alkylene group, a cycloalkylene group, a cycloalkylalkylene group, an alkenylene group, an arylene group, or an aralkylene group, and has 1 to 18 carbon atoms; and

$R^5$ is selected from an alkyl group, a cycloalkyl group, an alkenyl group, a cycloalkenyl group, an aryl group, or an aralkyl group, and has 1 to 18 carbon atoms.

These examples of the silane coupling agent may be used alone or in combination of two or more.

Examples of the compound represented by Formula (IV) include bis(3-triethoxysilylpropyl)tetrasulfide, bis(3-trimethoxysilylpropyl)tetrasulfide, bis(3-methyldimethoxysilylpropyl)tetrasulfide, bis(3-triethoxysilylethyl)tetrasulfide, bis(3-triethoxysilylpropyl)disulfide, bis(3-trimethoxysilylpropyl)disulfide, and bis(3-triethoxysilylpropyl)trisulfide.

Examples of the compound represented by Formula (V) include 3-mercaptopropyltrimethoxysilane, 3-mercaptopropyltriethoxysilane, vinyltriethoxysilane, vinyltrimethoxysilane, 3-aminopropyltriethoxysilane, 3-aminopropyltrimethoxysilane, 3-mercaptopropylmethyldimethoxysilane, γ-glycidoxypropyltrimethoxysilane, and γ-glycidoxypropylmethyldiethoxysilane. Commercially available products thereof include, for example, "VP Si363" (trade name by Evonik Degussa Corporation).

Examples of the compound represented by Formula (VI) include 3-trimethoxysilylpropyl-N,N-dimethylcarbamoyltetrasulfide, 3-trimethoxysilylpropylbenzothiazolyltetrasulfide, and 3-trimethoxysilylpropylmethacryloylmonosulfide.

In addition, regarding the compound represented by Formula (VII), $R^2$, $R^5$, $R^6$, and $R^7$ in Formula (VII) may contain a linear or branched alkyl group, including, but not limited to, a methyl group, an ethyl group, a propyl group, and an isopropyl group. $R^2$, $R^5$, $R^6$, and $R^7$ may also contain a linear or branched alkenyl group, including, but not limited to, a vinyl group, an allyl group, and a methenyl group. Further, examples of the cycloalkyl group include a cyclohexyl group and an ethyl cyclohexyl group, examples of the cycloalkenyl group include a cyclohexenyl group and an ethyl cyclohexyl group, and examples of the aryl group include a phenyl group and a tolyl group. Still further, $R^5$ may contain an aralkyl group such as a phenethyl group.

In Formula (VII), $R^4$ and $R^8$ may contain a linear or branched alkylene group, including, but not limited to, a methylene group, an ethylene group, a trimethylene group, and a propylene group. In addition, examples of the cycloalkylene group include a cyclohexylene group. Moreover, $R^4$ may contain a linear or branched alkenylene group, including, but not limited to, a vinylene group and a propenylene group. Further, examples of the cycloalkyl alkylene group include a cyclohexyl methylene group, examples of the arylene group include a phenylene group, and examples of the aralkylene group include a xylylene group.

In addition, $R^3$ in Formula (VII) may contain a $-[O(R^8O)_m]_{0.5}-$ group, including, but not limited to, a 1,2-ethanedioxy group, a 1,3-propanedioxy group, a 1,4-butanedioxy group, a 1,5-pentanedioxy group, and a 1,6-hexanedioxy group. The compound represented by Formula (VII) may be synthesized in the same manner as in the method described in JP2001505225A, or may be a commercially available product such as "NXT" (trade name by Momentive Performance Materials Inc., 3-octanoylthio-propyltriethoxysilane with $R^1=C_2H_5O$, $R^4=C_3H_6$, $R^5=C_7H_{15}$, x=3, y=0, and z=0 in Formula (VII)).

Among the compounds represented by Formula (IV), (V), (VI), and (VII), preferred is the compound represented by Formula (V) or (VII), and more preferred is a compound containing a sulfur element.

No particular limitation is placed on the method of kneading the rubber component with the silica. For example, the rubber component may be kneaded with the hydrous silicate using an open type kneader such as a roll, an internal mixer such as a Banbury mixer, or the like.

• Other Components

The rubber composition disclosed herein further contains carbon black as a reinforcing filler. The content of the carbon black is 80 parts by mass or less, and more preferably 60 parts by mass or less, per 100 parts by mass of the rubber component. If the content of the carbon black exceeds 80 parts by mass per 100 parts by mass of the rubber component, the rubber composition may suffer deterioration in the low heat generating property.

When the rubber composition contains the carbon black, the total content of the carbon black and the silica is preferably 200 parts by mass or less, and more preferably 150 parts by mass or less, per 100 parts by mass of the rubber component. The reason is that setting the total content of the carbon black and the silica to 200 parts by mass or less per 100 parts by mass of the rubber component makes it possible to guarantee the low heat generating property of the rubber composition and further improve rolling resistance.

To the rubber composition of the disclosure, any additive that is usually added to a general rubber composition may be added so as not to impair the effect of the disclosure. For example, any additive commonly used in the rubber industry, such as an antioxidant, a vulcanization accelerator, sulfur, zinc oxide, stearic acid, an antiozonant, or a surfactant may be added as appropriate.

<Crosslinked Rubber Composition>

The rubber composition disclosed herein may be used in a crosslinked state (or as a crosslinked rubber composition).

The crosslinking conditions to be applied to the rubber composition are not particularly limited. As one example, however, publicly-known vulcanization conditions may be used (for example, at a temperature of 100 °C or higher, preferably from 125 °C to 200 °C, and more preferably from 130 °C to 180 °C).

<Rubber Products>

The above-described rubber composition and crosslinked rubber composition according to the disclosure are not limited to applications in tires, but may be used for various rubber products. Examples thereof include belts, hoses, rubber crawlers, vibration damping rubber, air springs, seismic isolation rubber, various chemical products, films, and the like. Among these, the rubber composition is preferably used for a tire from the viewpoint of effectively exhibiting wear resistance and low-loss property.

The tire according to the disclosure is obtainable by using the rubber composition disclosed herein as the tire material. Preferred members for tires in which the tire material is used are treads. A tire using the rubber composition disclosed herein in the tread exhibits excellent wear resistance and low-loss property. Note that examples of the gas filled in the tire disclosed herein include regular air, air with adjusted partial pressure of oxygen, and an inert gas such as nitrogen.

EXAMPLES

The disclosure will be demonstrated below based on examples. However, the disclosure is not limited to these examples.

<Production Example: Silica>

Silicas A to F and 1 to 5 were prepared according to the following procedure. For Silicas 1, 2, and 5, commercially available silicas were used.

• Silica A

In this case, 85 liters of water and 6.0 liters of an aqueous solution of sodium silicate ($SiO_2$: 150 g/L, $SiO_2$/$Na_2O$ mass ratio: 3.3) were charged into a 240 liter jacketed stainless steel container equipped with a stirrer and heated to a temperature of 90 °C. At this time, the pH was 11.2 and the $SiO_2$ concentration was 10.0 g/L. To this aqueous solution were added an aqueous solution of sodium silicate similarly prepared as above and sulfuric acid (18.4 mol/L) in such a manner that the $SiO_2$ concentration of 60 g/L was reached in 100 minutes while maintaining the temperature of 90 $\pm$ 1 °C and the pH of 11.2, and only the addition of the aqueous solution of sodium silicate was stopped in 100 minutes. Subsequently, sulfuric acid similarly prepared as above was added until the pH reached 3 to obtain a precipitate. Then, the resulting reaction product was filtered and washed with water to obtain a cake.

The obtained cake was emulsified (by dispersing the cake in water by vigorous stirring to make it into a liquid state), sodium aluminate was added to this emulsion in terms of a mass ratio of $Al_2O_3$/$SiO_2$ of 2.00 % with respect to the amount of silicate in the cake, and after the addition, drying was carried out to obtain hydrous silicate (Silica A).

For Silica A thus obtained, the BET specific surface area, the CTAB specific surface area, the pH values before and after washing, the $Al_2O_3$ content, and the value of $Al_2O_3$ - 10.9 $\times$ (BET specific surface area/CTAB specific surface area) are listed in Table 1.

• Silica B

A cake similarly obtained as in Silica A was emulsified and, in a manner similar to Silica A other than adding sodium aluminate to this emulsion in terms of a mass ratio of $Al_2O_3$/$SiO_2$ of 1.00 % with respect to the amount of silicate in the cake, hydrous silicate (Silica B) was obtained.

For Silica B thus obtained, the BET specific surface area, the CTAB specific surface area, the pH values before and after washing, the $Al_2O_3$ content, and the value of $Al_2O_3$ - 10.9 $\times$ (BET specific surface area/CTAB specific surface area) are listed in Table 1.

• Silica C

In this case, 85 liters of water, 6.0 liters of an aqueous solution of sodium silicate ($SiO_2$: 150 g/L, $SiO_2$/$Na_2O$ mass ratio: 3.3), and sodium aluminate in terms of a mass ratio of $Al_2O_3$/$SiO_2$ of 1.00 % with respect to the amount of silicate in the cake obtained after the reaction were charged into a 240 liter jacketed stainless steel container equipped with a stirrer, and heated to a temperature of 90 °C. At this time, the pH was 11.2 and the $SiO_2$ concentration was 9.9 g/L. To this aqueous solution were added an aqueous solution of sodium silicate similarly prepared as above and sulfuric acid (18.4 mol/L) in such a manner that the $SiO_2$ concentration of 60 g/L was reached in 100 minutes while maintaining the temperature of 90 $\pm$ 1 °C and the pH of 11.2, and only the addition of the aqueous solution of sodium silicate was stopped in 100 minutes. Subsequently, sulfuric acid similarly prepared as above was added until the pH reached 3 to obtain a precipitate. Then, the resulting reaction product was filtered and washed with water to obtain a cake.

The obtained cake was emulsified, sodium aluminate was added to this emulsion in terms of a mass ratio of $Al_2O_3$/$SiO_2$ of 1.00 % with respect to the amount of silicate in the cake, and after the addition, drying was carried out to obtain hydrous silicate (Silica C).

For Silica C thus obtained, the BET specific surface area, the CTAB specific surface area, the pH values before and after washing, the $Al_2O_3$ content, and the value of $Al_2O_3$ - 10.9 $\times$ (BET specific surface area/CTAB specific surface area) are listed in Table 1.

• Silica D

In this case, 115 liters of water and 0.75 liters of an aqueous solution of sodium silicate ($SiO_2$: 150 g/L, $SiO_2$/$Na_2O$ mass ratio: 3.3) were charged into a 240 liter jacketed stainless steel container equipped with a stirrer, and heated to a temperature of 90 °C. At this time, the pH was 10.3 and the $SiO_2$ concentration was 1.0 g/L. To this aqueous solution were added an aqueous solution of sodium silicate similarly prepared as above and sulfuric acid (18.4 mol/L) in such a manner that the $SiO_2$ concentration of 52 g/L was reached in 75 minutes while maintaining the temperature of 90 $\pm$ 1 °C and the pH of 10.3, and only the addition of the aqueous solution of sodium silicate was stopped in 75 minutes. Subsequently, sulfuric acid similarly prepared as above was added until the pH reached 3 to obtain a precipitate. Then, the resulting reaction product was filtered and washed with water to obtain a cake.

The obtained cake was emulsified, sodium aluminate was added to this emulsion in terms of a mass ratio of $Al_2O_3$/$SiO_2$ of 2.00 % with respect to the amount of silicate in the cake, and after the addition, drying was carried out to obtain hydrous silicate (Silica D).

For Silica D thus obtained, the BET specific surface area, the CTAB specific surface area, the pH values before and after washing, the $Al_2O_3$ content, and the value of $Al_2O_3$ - 10.9 $\times$ (BET specific surface area/CTAB specific surface area) are listed in Table 1.

• Silica E

In this case, 80 liters of water and 14 liters, which is more than normal, of an aqueous solution of sodium silicate ($SiO_2$: 150 g/L, $SiO_2/Na_2O$ mass ratio: 3.3) were charged into a 240 liter jacketed stainless steel container equipped with a stirrer, and heated to a temperature of 82 °C. At this time, the $SiO_2$ concentration was 22 g/L and the pH was 11.5. To this aqueous solution were added an aqueous solution of sodium silicate similarly prepared as above and sulfuric acid (18.4 mol/L) in such a manner that the $SiO_2$ concentration of 65 g/L and the pH of 10.9 were reached in 100 minutes while maintaining the temperature of 82 $\pm$ 1 °C, and only the addition of the aqueous solution of sodium silicate was stopped in 100 minutes. To obtain a pH of 10.9 for the above reaction solution (the pH of which before the start of the reaction was 11.5), sulfuric acid was added such that the addition amount of sulfuric acid to the aqueous solution of sodium silicate became excessive.

After completion of a predetermined neutralization reaction, sulfuric acid similarly prepared as above was added until the pH reached 3 to obtain a precipitate. Then, the resulting reaction product was filtered and washed with water to obtain a cake. The obtained cake was emulsified, sodium aluminate was added to this emulsion in terms of a mass ratio of $Al_2O_3/SiO_2$ of 2.00 % with respect to the amount of silicate in the cake, and after the addition, drying was carried out to obtain hydrous silicate (Silica E).

For Silica E thus obtained, the BET specific surface area, the CTAB specific surface area, the pH values before and after washing, the $Al_2O_3$ content, and the value of $Al_2O_3$ - 10.9 $\times$ (BET specific surface area/CTAB specific surface area) are listed in Table 1.

• Silica F

A cake similarly obtained as in Silica E was emulsified and, in a manner similar to Silica E other than adding sodium aluminate to this emulsion in terms of a mass ratio of $Al_2O_3/SiO_2$ of 3.00 % with respect to the amount of silicate in the cake, hydrous silicate (Silica F) was obtained.

For Silica F thus obtained, the BET specific surface area, the CTAB specific surface area, the pH values before and after washing, the $Al_2O_3$ content, and the value of $Al_2O_3$ - 10.9 $\times$ (BET specific surface area/CTAB specific surface area) are listed in Table 1.

• Silicas 1, 2, 5

For Silicas 1, 2, and 5, commercially available silicas as indicated in Table 1 were used.

For each silica used, the BET specific surface area, the CTAB specific surface area, and the pH values before and after washing are listed in Table 1.

• Silica 3

A cake similarly obtained as in Silica E was emulsified and, in a manner similar to Silica E other than carrying out the drying process without adding sodium aluminate to the emulsion, hydrous silicate (Silica 3) was obtained.

For Silica 3 thus obtained, the BET specific surface area, the CTAB specific surface area, and the pH values before and after washing are listed in Table 1.

• Silica 4

A cake similarly obtained as in Silica E was emulsified and, in a manner similar to Silica E other than adding sodium aluminate to this emulsion in terms of a mass ratio of $Al_2O_3/SiO_2$ of 0.70 % with respect to the amount of silicate in the cake, hydrous silicate (Silica 4) was obtained.

For Silica 4 thus obtained, the BET specific surface area, the CTAB specific surface area, and the pH values before and after washing are listed in Table 1.

Table 1

| | Silica A | Silica B | Silica C | Silica D | Silica E | Silica F | Silica 1[*1] | Silica 2[*2] | Silica 3 | Silica 4 | Silica 5[*3] |
|---|---|---|---|---|---|---|---|---|---|---|---|
| BET | 150 | 138 | 173 | 141 | 242 | 232 | 225 | 126 | 300 | 282 | 216 |
| CTAB | 152 | 131 | 147 | 153 | 248 | 237 | 147 | 139 | 246 | 240 | 208 |
| pH before washing | 5.6 | 6.2 | 5.9 | 6.1 | 6.4 | 6.4 | 5.4 | 10.5 | 6.4 | 6.2 | 6.2 |
| pH after washing | 5.1 | 4.4 | 5.5 | 5.2 | 4.1 | 4.4 | 3.6 | 4.4 | 3.3 | 3.4 | 3.6 |
| $Al_2O_3$ content (mass%) | 2.00 | 1.00 | 2.00 | 2.00 | 2.00 | 3.00 | - | - | - | - | - |
| $Al_2O_3 - 10.9 \times$ (BET/ CTAB) | -8.76 | -10.48 | -10.83 | -8.05 | -8.64 | -7.67 | - | - | - | - | - |
| *1: "Nipsil AQ" manufactured by Tosoh Silica Corporation<br>*2: "Nipsil NA" manufactured by Tosoh Silica Corporation<br>*3: "Zeosil Premium 200 MP" manufactured by Solvay | | | | | | | | | | | |

<Examples 1 to 12 and Comparative Examples 1 to 10>

In accordance with any of Formulations A and B in Tables 2A and 2B, blending and kneading were carried out in a conventional manner to prepare rubber composition samples.

Any of Silicas A to F and 1 to 5 described above was compounded in each rubber composition sample. Table 3 lists the selected formulation and silica conditions.

Table 2A

| Formulation A | Content |
|---|---|
| SBR *1 | 100 |
| Carbon black *2 | 15 |
| Silica *3 | 75 |
| Silane coupling agent *4 | 7 |
| Aromatic oil | 36 |
| Stearic acid | 2 |
| Antioxidant *5 | 1 |
| Zinc oxide | 3 |
| Vulcanization accelerator A *6 | 1 |
| Vulcanization accelerator B *7 | 1 |
| Vulcanization accelerator C *8 | 1 |
| Sulfur | 1.5 |
| Units: parts by mass per 100 parts by mass of the rubber component. | |

Table 2B

| Formulation B | Content |
|---|---|
| Natural rubber | 100 |
| Silica *3 | 50 |
| Silane coupling agent *4 | 4 |
| Stearic acid | 2 |
| Antioxidant *5 | 1 |
| Zinc oxide | 3 |
| Vulcanization accelerator C*8 | 1 |
| Sulfur | 1.2 |

Units: parts by mass per 100 parts by mass of the rubber component.
*1: SBR: styrene-butadiene rubber, "#1500", manufactured by JSR Corporation
*2: "SEAST KH® (N339)", manufactured by Tokai Carbon Co., Ltd. (SEAST KH is a registered trademark in Japan, other countries, or both.)
*3: One of Silicas A to C (The selected silica samples are listed in Table 3.)
*4 "NXT®", manufactured by Momentive Performance Materials Inc. (NXT is a registered trademark in Japan, other countries, or both.)
*5: N-(1,3-dimethylbutyl)-N'-phenyl-p-phenylenediamine, NOCRAC 6C, manufactured by Ouchi Shinko Chemical Industrial Co., Ltd.
*6: diphenylguanidine, "Nocceler D", manufactured by Ouchi Shinko Chemical Industrial Co., Ltd.
*7 benzothiazyl disulfide, NOCCELER DM-P, manufactured by Ouchi Shinko Chemical Industrial Co., Ltd.
*8 N-t-butyl-2-benzothiazylsulphenamide, NOCCELER NS-P, manufactured by Ouchi Shinko Chemical Industrial Co., Ltd.

<Evaluation>

For each rubber composition sample, a pneumatic tire was prototyped (size of test tire: 195/65 R15) by a conventional method and the following evaluation was made.

In each evaluation in Table 3, the results were converted into an index with the result of Comparative Example 1 being 100 for Examples 1 to 4 and Comparative Examples 1 and 2, with the result of Comparative Example 3 being 100 for Examples 5 to 8 and Comparative Examples 3 and 4, with the result of Comparative Example 5 being 100 for Examples 9 and 10 and Comparative Examples 5 to 7, and with the result of Comparative Example 8 being 100 for Examples 11 and 12 and Comparative Examples 8 to 10.

(1) Unvulcanized Viscosity

For each rubber composition sample, the unvulcanized viscosity was evaluated by conducting a Mooney viscosity test at 100 °C in accordance with JIS K 6300-1.

A lower index value indicates lower viscosity and easier molding operation of the unvulcanized rubber.

(2) Wear Resistance

Measurement was made of the remaining groove depth of a vehicle equipped with prototype tires after a 20,000 km run for wear resistance evaluation. A higher index value for the remaining groove depth indicates better wear resistance.

(3) Low-loss property

A uniaxial drum tester for measuring rolling resistance was used in an indoor environment to evaluate rolling resistance of each prototype tire under the condition of 80 km/h. The inverse of the rolling resistance measurement was taken and expressed as an index, where a larger index value indicates lower rolling resistance and better low-loss property.

Table 3

| Conditions / Evaluation | | Example 1 | Example 2 | Example 3 | Example 4 | Comp. Ex. 1 | Comp. Ex. 2 | Example 5 | Example 6 | Example 7 | Example 8 | Comp. Ex. 3 | Comp. Ex. 4 | Example 9 | Example 10 | Comp. Ex. 5 | Comp. Ex. 6 | Comp. Ex. 7 | Example 11 | Example 12 | Comp. Ex. 8 | Comp. Ex. 9 | Comp. Ex. 10 |
|---|---|---|---|---|---|---|---|---|---|---|---|---|---|---|---|---|---|---|---|---|---|---|---|
| Conditions | Silica Type | A | B | C | D | 1 | 2 | A | B | C | D | 1 | 2 | E | F | 3 | 4 | 5 | E | F | 3 | 4 | 5 |
| Conditions | Formulation | A | A | A | A | A | A | B | B | B | B | B | B | A | A | A | A | A | B | B | B | B | B |
| Evaluation | Unvulcanized Viscosity | 89 | 94 | 94 | 87 | 100 | 100 | 89 | 94 | 93 | 86 | 100 | 102 | 81 | 82 | 100 | 96 | 88 | 85 | 85 | 100 | 99 | 88 |
| Evaluation | Wear Resistance | 124 | 123 | 126 | 122 | 100 | 106 | 120 | 117 | 120 | 118 | 100 | 102 | 127 | 134 | 100 | 106 | 111 | 121 | 126 | 100 | 103 | 108 |
| Evaluation | Low-loss property | 115 | 116 | 120 | 115 | 100 | 98 | 113 | 114 | 116 | 113 | 100 | 96 | 110 | 112 | 100 | 111 | 89 | 108 | 109 | 100 | 106 | 91 |

Note: "Comp. Ex." is Comparative Example.

Examples 1-8, and 11-12 are provided for reference only.

As can be seen from the results in Table 3, the samples in our examples within the scope of the disclosure all exhibited superior results in terms of reduction of unvulcanized viscosity, wear resistance, and low-loss property as compared with the samples in the comparative examples.

INDUSTRIAL APPLICABILITY

With the rubber composition disclosed herein, it is possible to provide a rubber composition and a tire that can reduce unvulcanized viscosity and have excellent wear resistance and low-loss property.

**Claims**

1. A rubber composition comprising silica and carbon black by 80 parts or less per 100 parts by mass of a rubber component,
   wherein the silica has a pH of 10.0 or less before washing and a pH of 4.0 or more after washing, and contains $Al_2O_3$, and
   the content in mass% of $Al_2O_3$, a BET specific surface area in $m^2/g$ of the silica and a CTAB specific surface area in $m^2/g$ of the silica satisfy:

$$Al_2O_3 - 10.9 \times (\text{BET specific surface area/CTAB specific surface area}) > -9.5,$$

   wherein the content of $Al_2O_3$ in the silica is 0.2 mass% to 5 mass%, and
   wherein the CTAB specific surface area of the silica is 175 $m^2/g$ or more, and the BET specific surface area of the silica is 200 $m^2/g$ or more.

2. The rubber composition according to claim 1, wherein the silica is obtainable by addition of aluminate (i) after completion of a formation reaction of silica particles and (ii) after emulsification of a silica cake resulting from washing with water.

3. A tire comprising the rubber composition as recited in claim 1 or 2.

**Patentansprüche**

1. Kautschukzusammensetzung umfassend Siliciumdioxid und Ruß von 80 Teilen oder weniger pro 100 Teilen, auf die Masse bezogen, einer Kautschukkomponente,
   wobei das Siliciumdioxid einen pH-Wert von 10,0 oder weniger vor dem Waschen und einen pH-Wert von 4,0 oder mehr nach dem Waschen aufweist und $Al_2O_3$ enthält und
   der Gehalt, in Masse-%, an $Al_2O_3$, ein BET-spezifischer Oberflächenbereich in $m^2/g$ des Siliciumdioxids und ein CTAB-spezifischer Oberflächenbereich in $m^2/g$ des Siliciumdioxids Folgendem entsprechen:

$$Al_2O_3 - 10,9 \text{ x (BET-spezifischer Oberflächenbereich/CTAB-spezifischer Oberflächenbereich)} > -9,5,$$

   wobei der Gehalt an $Al_2O_3$ in dem Siliciumdioxid 0,2 Masse-% bis 5 Masse-% beträgt und
   wobei der CTAB-spezifische Oberflächenbereich des Siliciumdioxids 175 $m^2/g$ oder mehr beträgt,
   und der BET-spezifische Oberflächenbereich des Siliciumdioxids 200 $m^2/g$ oder mehr beträgt.

2. Kautschukzusammensetzung nach Anspruch 1, wobei das Siliciumdioxid durch Zugabe von Aluminat (i) nach Abschluss einer Bildungsreaktion von Siliciumdioxidteilchen und (ii) nach Emulgieren eines Siliciumdioxidkuchens, der vom Waschen mit Wasser resultiert, erhältlich ist.

3. Reifen umfassend die Kautschukzusammensetzung wie in Anspruch 1 oder 2 aufgeführt.

**Revendications**

1. Composition de caoutchouc comprenant de la silice et du noir de carbone en 80 parties ou moins pour 100 parties en masse d'un composant de caoutchouc,
   la silice ayant un pH de 10,0 ou moins avant le lavage et un pH de 4,0 ou plus après le lavage, et contenant du $Al_2O_3$, et la teneur en % en masse du $Al_2O_3$, une surface spécifique B.E.T. en $m^2$/g de la silice et une surface spécifique CTAB en $m^2$/g de la silice satisfaisant:

   $$Al_2O_3 - 10{,}9 \text{ x (surface spécifique B.E.T./surface spécifique CTAB)} > -9{,}5,$$

   la teneur en $Al_2O_3$ dans la silice étant de 0,2 % en masse à 5 % en masse, et
   la surface spécifique CTAB de la silice étant de 175 $m^2$/g ou plus,
   et la surface spécifique B.E.T. de la silice étant de 200 $m^2$/g ou plus.

2. Composition de caoutchouc selon la revendication 1, la silice pouvant être obtenue par addition d'aluminate (i) après l'achèvement d'une réaction de formation de particules de silice et (ii) après l'émulsification d'un tourteau de silice résultant du lavage avec l'eau.

3. Pneumatique comprenant la composition de caoutchouc telle qu'énoncée selon la revendication 1 ou 2.

## REFERENCES CITED IN THE DESCRIPTION

### Patent documents cited in the description

- JP H6248116 A
- JP 2001294711 A
- FR 2994961 A1
- JP 2001505225 A